(19) Europäisches Patentamt

European Patent Office

Office européen des brevets

(11) **EP 1 239 278 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(51) Int Cl.7: **G01N 21/45**, G01N 21/896

(21) Anmeldenummer: **02005456.5**

(22) Anmeldetag: **08.03.2002**

(54) **Verfahren und Vorrichtung zur Bewertung von Schlieren in optischen Materialien**

Method and device for assessing striae in optical materials

Procédé et dispositif permettant l'évaluation de stries dans un matériau optique

(84) Benannte Vertragsstaaten:
**AT BE CH CY DE DK ES FI FR GB GR IE IT LI LU MC NL PT SE TR**

(30) Priorität: **09.03.2001 DE 10111450**

(43) Veröffentlichungstag der Anmeldung:
**11.09.2002 Patentblatt 2002/37**

(73) Patentinhaber:
- **Schott AG**
  **55122 Mainz (DE)**
- **Carl Zeiss SMT AG**
  **73447 Oberkochen (DE)**

(72) Erfinder:
- **Gerhard, Michael, Dr.**
  **73432 Aalen (DE)**
- **Lentes, Frank-Thomas, Dr.**
  **55411 Bingen (DE)**
- **Kusch, Christian, Dr.**
  **07743 Jena (DE)**
- **Singer, Wolfgang, Dr.**
  **73431 Aalen (DE)**
- **Mörsen, Ewald, Dr.**
  **55130 Mainz (DE)**

(74) Vertreter: **Fuchs Mehler Weiss & Fritzsche**
**Naupliastrasse 110**
**81545 München (DE)**

(56) Entgegenhaltungen:
**US-A- 5 694 479          US-A- 5 764 345**

**Beschreibung**

Die Erfindung betrifft ein Verfahren und eine Vorrichtung zur Bewertung von Schlieren in optischen Materialien mittels der Schattenmethode.

Schlieren sind nach dem allgemeinen Sprachgebrauch begrenzte Bereiche in optischen Materialien, die sich aufgrund einer lokalen Änderung des Brechungsindexes optisch auswirken und meist in der Form von Fäden, Bändern oder Schleier in einem Bild sichtbar sind. Anders ausgedrückt ist der Brechungsindex nahezu aller optischen Materialien räumlich nicht völlig konstant, sondern weist eine gewisse Variationsbreite auf. Schlieren sind dabei definiert als optische Inhomogenitäten mit kleinen Strukturbreiten und einem hohen Gradienten des Brechungsindexes.

Es ist eine Anzahl unterschiedlicher Methoden bekannt, um Schlieren in optischen Materialien nachzuweisen. Praktisch alle diese Methoden beruhen darauf, Änderungen der optischen Wellenfront nach Durchgang durch die zu untersuchende Probe zu erkennen und zu bewerten. Die am weitesten verbreiteten Methoden sind die Interferometrie, die Töpler-Methode und die Schattenmethode.

Mittels der Interferometrie und der Töpler-Methode lassen sich zwar Änderungen in der Wellenfront direkt feststellen; dabei gehen jedoch Oberflächenfehler an der Probe, wie beispielsweise nicht vollständig ebene Oberflächen, ebenfalls direkt in die Messung ein. Durch die daraus resultierenden hohen Anforderungen an die Oberflächenebenheit wird die Messung sehr aufwendig.

Im übrigen sind im Handel keine zur Schlierenmessung fertig hergerichteten Interferometer erhältlich; d.h. wer Schlieren mit einem Interferometer vermessen will, muß sich dieses selbst zusammenbauen. Dabei ist es wichtig, daß die räumliche Auflösung des Interferometers so groß ist, dass auch noch feine Schlierenstrukturen erkannt werden, deren Größe im Mikrometerbereich liegen kann.

Zum Nachweis von Schlieren wird deshalb bevorzugt die Schattenmethode eingesetzt, weil sie einerseits relativ empfindlich ist und andererseits mit einer Oberflächenqualität an der Probe auskommt, wie sie typischerweise bei optischen Materialien Standard ist.

Bei der Schattenmethode wird das optische Material entweder zwischen eine Lichtquelle und das Auge eines Beobachters gehalten und die schattenwerfenden Schlieren durch Bewegen und Kippen der Probe festgestellt (MIL-G-174A und ähnliche Standards), oder die Probe wird mit Licht durchstrahlt und die in der Probe enthaltenen Schlieren als Schatten auf einen Projektionsschirm projiziert (DDR-Fachbereichsstandard TGL 21790, ein ähnlicher ISO-Standard ist in Vorbereitung).

Auch die DIN 3140, Teil 3, befaßt sich mit Schlieren, hat aber in der Praxis nur eine geringe Bedeutung.

Da Schlieren räumliche Gebilde sind, wird beim Standard TGL 21790 und auch bei der DIN 3140 versucht, das Ausmaß der Schlierenbildung durch eine effektive Schlierenfläche zu charakterisieren. Alle genannten Vorgehensweisen haben jedoch den Nachteil, daß sie stark von der subjektiven Bewertung durch den Beobachter abhängen. Beim Standard TGL 21790 werden zwar zur Ermittlung der Sichtbarkeitsschwelle definierte Vergleichsschlieren herangezogen. Aber auch bei dem optischen Vergleich mit Testmustern erfolgt bei den bekannten Verfahren die Festlegung des Grades der Schlierenbildung allein durch das Auge und nach dem Empfinden des jeweiligen Betrachters.

Dabei wird in der Regel so vorgegangen, daß das Schattenbild der jeweiligen Probe auf ein Blatt Papier abgezeichnet wird, wobei die Breite und die Intensität der einzelnen Schattenlinien subjektiv bewertet und die Bewertung in die Handskizze eingetragen wird.

Darüberhinaus betreffen die genannten Standards ausschließlich Gläser und glasartige Substanzen. Für optische Bauteile werden jedoch zunehmend auch Kristalle herangezogen, insbesondere für Wellenlängen, die außerhalb des sichtbaren Bereichs liegen, das heißt im wesentlichen unterhalb von etwa 400 nm und oberhalb von etwa 800 nm. So besteht zum Beispiel eine zunehmende Nachfrage nach monokristallinem Material aus Alkali- und Erdalkalifluoriden ($CaF_2$, $BaF_2$, $SrF_2$ u.a.) für UV-Anwendungen wie die UV-Lithographie oder Linsen und Fenster für Bestrahlungs- und Abbildungsgeräte. Gleichermaßen stellen Kristalle im IR-Spektralbereich die Basis für viele optische Elemente dar.

Gläser und Kristalle unterscheiden sich bekanntlich durch ihren ungeordneten bzw. geordneten Aufbau. Schlieren in Kristallen können daher ganz andere Ursachen haben als Schlieren in Glas. Die Wirkung von Schlieren in einem Kristall hängt unter anderem sehr stark von der Lage und der Orientierung der die Schliere hervorrufenden Inhomogenität (z.B. einer Korngrenze) ab. In Kristallen können Schlieren durch bandförmige Strukturen großer Breite, aber nur geringer Dicke (z.B. Versetzungen, Kleinwinkelkorngrenzen) hervorgerufen werden. Die für Gläser entwickelten Methoden sind daher nicht geeignet, ein mit Schlieren dieser Art durchsetztes Substrat mit der erforderlichen Genauigkeit zu bewerten.

Auch die für die Gläser gegebenenfalls verwendeten Test- oder Vergleichs-Schlierenmuster sind aufgrund der völlig anderen Entstehungsmöglichkeiten von Schlieren für Kristalle nicht anwendbar. Bei den zur Prüfung von optischen Gläsern entwickelten, bekannten Vergleichs-Schlierenprüfplatten werden Phasensprünge verschiedener Stärke und Breite durch eine Beschichtung simuliert. Eine solche zweidimensionale Schlierenprüfplatte ist jedoch überhaupt nicht dafür geeignet, die Wirkung von Schlieren in Kristallen umfassend darzustellen.

Insbesondere hat sich bei den Untersuchungen zur vorliegenden Erfindung gezeigt, daß der Phasenhub bei einigen kristallinen Materialien wie Kalziumfluorid gegenüber den Gläsern das umgekehrte Vorzeichen aufweist. Die bislang bekannte Schlierenprüf- und Vergleichsplatte besteht aber in der Regel aus einem unempfindlichen Material, vorzugsweise aus Quarz bzw. Quarzglas. Auf dieser Platte wurden z.B. mittels eines dünnen Überzuges und einer Fotomaske verschiedene Strukturen aufgebracht. Üblicherweise wurden in einem 10 nm dicken Überzug Aussparungen von z.B. 0,2 mm Breite und 1 cm Länge eingebracht, wodurch beim Durchleiten einer Wellenfront ein Phasenhub erzeugt wird. Prinzipiell ist es genauso möglich einen Phasenhub durch das Anbringen von Erhebungen anstatt von Aussparungen erzeugen, wobei sich allerdings das Vorzeichen des Hubes ändert. Die subjektiv anhand einer solchen Vergleichsplatte bewertete Intensität und Breite von Linien im Schattenbild hat jedoch bei einer Probe aus kristallinem Material keine Aussagekraft, da dort eine Änderung der Lichtwellenfront durch eine Änderung der Brechzahl bewirkt wird. Es wurde daher im Rahmen der Erfindung gefunden, dass die mit der Schattenmethode an Kristallen durch Vergleich mit der bekannten Schlierenprüfplatte erhaltenen Ergebnisse meist unbrauchbar und unzuverlässig waren. Sie lassen keinen für die Praxis relevanten Rückschluß auf die Güte des kristallinen optischen Elements zu.

Der Erfindung liegt daher die Aufgabe zugrunde, ein Verfahren und eine Vorrichtung zum objektiven Bewerten von Schlieren mittels der Schattenmethode zu schaffen, das bzw. die nicht nur für glasartige Materialien, sondern auch für Kristalle und andere nicht glasartige optische Substanzen geeignet ist. Darüber hinaus soll dieses Verfahren objektive, d.h. von der subjektiven Bewertung eines Testers unabhängige Ergebnisse liefern.

Diese Aufgabe wird erfindungsgemäß mit den in den Patentansprüchen angegebenen Merkmalen für ein Verfahren bzw. eine Vorrichtung gelöst.

Erfindungsgemäß wird somit der Schattenwurf der Schlieren in einer Probe mit Hilfe einer Kamera aufgenommen und über eine Bildverarbeitung der Kontrast des Schattenwurfs bestimmt. Da mit der Schattenmethode eine direkte Messung der Wellenfrontverzögerungen im Material durch die Änderungen der optischen Weglänge nicht möglich ist, wird die mit der Schattenmethode gewonnene Abbildung mittels Strukturen mit bekannter Wellenfrontverzögerung geeicht oder kalibriert; dazu werden die Schlieren einer beliebigen Probe (Musterprobe) interferometrisch vermessen und dem Schattenwurf bzw. Kontrast der jeweiligen Schliere zugeordnet. Auf diese Weise läßt sich zu jedem interferometrisch gemessenen Schlierentyp ein einfach zu messender Kontrastschatten zuordnen. Diese Zuordnung wird erfindungsgemäß auch als Urkalibrierung bezeichnet. Als Musterprobe werden vorzugsweise Proben, z. B. Spaltstücke eines Kristalles verwendet, die aus dem gleichen Material bestehen wie die zu bewertenden optischen Materialien. Besonders bevorzugt hierfür werden Musterproben verwendet, die verschieden starke und schwache Schlierenmuster aufweisen.

Mit anderen Worten läßt sich erst durch die Verknüpfung der mit der Schattenmethode erhaltenen Werte mit interferometrisch gewonnenen Werten und die dadurch ausgeführte Kalibrierung die Schattenmethode in der Praxis zur Bestimmung der optischen Güte insbesondere von kristallinem optischen Material gebrauchen.

Die vorliegende Erfindung liegt somit im wesentlichen in einer Anwendung der Schattenmethode in Verbindung mit einem neuen Vergleichsverfahren, wobei der Vergleich nicht visuell, sondern mittels elektronischer Bildverarbeitung erfolgt.

Das von der Kamera aufgenommene Schlierenmuster wird dabei einer digitalen Bildverarbeitung zugeführt und die erhaltene Abbildung mit dem Schlierenmuster der Urkalibrierung verglichen, so daß die mittlere Wellenfrontabweichung mit interferometrischer Genauigkeit bestimmt werden kann. Eine Erfassungsgrenze von weniger als 5 nm Phasenhub bei einer Wellenlänge von ca. 550 nm ist ohne weiteres möglich. Als Kamera wird erfindungsgemäß vorzugsweise eine digitale CCD-Kamera verwendet. Dabei hängt die zur Bildverarbeitung notwendige Auflösung der Kamera aber auch des Interferometers vom jeweiligen zu untersuchenden Material ab. Vorzugsweise beträgt sie mindestens 10 µm/Pixel, vorzugsweise mindestens 15 µm/Pixel. Bei $CaF_2$ reichen beispielsweise 20 µm/Pixel aus.

Bei dem erfindungsgemäßen Verfahren und der erfindungsgemäßen Vorrichtung brauchen die zu bewertenden optischen Proben selbst nicht aufwendig interferometrisch vermessen zu werden. Es erfolgt im Grunde nur einmal eine interferometrische Kalibrierung der Meßanordnung am Schattenwurf der Musterprobe aus gleichem Material, wobei die dabei erhaltenen Eichwerte im Rahmen einer Bildbearbeitung mit den später an den zu untersuchenden Proben von optischen Materialien erhaltenen Werten verglichen werden können, da es sich gezeigt hat, daß das Produkt aus Phasenhub im Quadrat mal Phasenbreite immer zum gleichen Kontrast führt. Vorzugsweise werden dabei die Eichwerte der Urkalibrierung direkt im Computer abgespeichert, so dass eine Eichdatei (virtuelle Schlierenplatte) entsteht, auf die jederzeit zurückgegriffen werden kann.

Erfindungsgemäß hat es sich als zweckmäßig erwiesen die Eichwerte der Urkalibrierung zusätzlich noch mit dem Schattenwurf einer herkömmlichen synthetischen Schlierenplatte zu vergleichen. Da der Kontrast bzw. die Feststellung des Kontrastes mit der Kamera auch abhängig ist vom Schirm, auf dem der Schattenwurf erzeugt wird, sowie von der Fokussierung und der Helligkeit der Lampe und dergleichen, ist es daher auf einfache Weise möglich, mittels der synthetischen Schlierenplatte zu überprüfen ob die Kalibrierung immer noch gültig ist.

Die elektronische Bildverarbeitung von Proben- und Musterbild ermöglicht eine quantitative Klassifizierung der auftretenden Schlieren, die nicht vom subjektiven Empfinden eines Beobachters abhängt. Die Bestimmung der Schlieren mittels Schattenwurf ist schnell, einfach und kostengünstig möglich.

Ein Ausführungsbeispiel der Erfindung wird im folgenden anhand der Zeichnung näher erläutert. Es zeigen:

Fig. 1 eine Skizze des Meßaufbaus für die Schattenmethode; und
Fig. 2 das Schattenbild einer synthetischen Schlierenplatte mit Musterschlieren.
Fig. 3 ein übliches Schlierenmuster in einem optischen Kristall.

Das in der Folge beschriebene Meßverfahren nach der Schattenmethode zum Nachweis und zur Bewertung von Schlieren in glasartigen sowie kristallinen optischen Materialien ist in der Lage, die optische Wirkung der Schlieren im Sinne einer RMS-Wellenfront-Deformation $w_{rms}$ mit interferometrischer Genauigkeit zu bewerten. Zur Klassifizierung der Probe wird der Wert $w_{rms}^2$ herangezogen, der proportional der Summe aus dem Phasenhub im Quadrat mal der Breite mal der Länge der einzelnen Schlieren, summiert über alle Schlieren und dividiert durch die Gesamtfläche der Probe ist, d.h.

$$w_{rms}^2 = \kappa(1/F) \; \Sigma(L \, B \, w^2)$$

mit

$\kappa$: Proportionalitätsfaktor
$F$: Gesamtfläche der Probe
$w$: Phasenhub
$L$: Länge der Schliere (im Material)
$B$: Breite der Schliere (im Material).

Die RMS-Wellenfront-Deformation $w_{rms}$ ist über folgende Beziehung mit dem Bildkontrast $\Delta T$ verknüpft, den ein optisches System liefert:

$$\Delta T = ((4\pi/\lambda)w_{rms})^2$$

Insbesondere bei Kristallen für die Verwendung im UV-Spektralbereich ist es erforderlich, bei einer Wellenlänge von zum Beispiel 550 nm Schlieren mit einem Phasenhub von 5 nm und weniger feststellen und nachweisen zu können.

Das Meßverfahren ist so ausgestaltet, daß es zur laufenden Prüfung in Produktionsprozessen geeignet ist; insbesondere ist das dem Produktionsprozeß entnommene optische Material abgesehen von einer gegebenenfalls erforderlichen Politur ohne weitere Zurichtung prüfbar. Um die Schlieren besonders in Kristallen erkennen und bewerten zu können, erfolgt eine Drehung und Kippung der zu prüfenden Probe des optischen Materials.

Im folgenden wird eine Vorrichtung beschrieben, mit der eine solche Bewertung von Schlieren möglich ist.

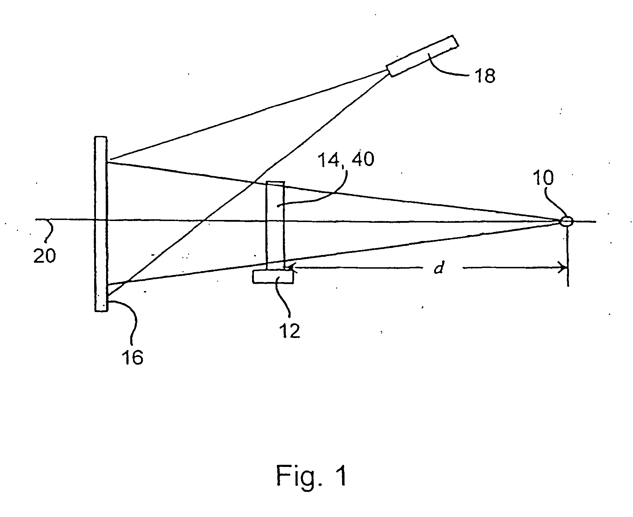

Die Vorrichtung umfaßt im wesentlichen den optischen Meßaufbau der Fig. 1 mit einer punktförmigen Lichtquelle 10, einem Probenhalter 12, einer zu untersuchenden Probe 14, einem Projektionsschirm 16 und einer Kamera 18. Obwohl in dem hier beschriebenen Aufbau der Einfachheit wegen divergentes Licht verwendet wird, ist das erfindungsgemäße Verfahren und die Vorrichtung auch mit parallelem Licht ausführbar. Bei der Messung gelangt auch eine Musterprobe 40 mit einem interferometrisch vermessenen Phasenmuster mit Schlieren bekannten Phasenhubs und bekannter Breite zur Kalibrierung des Schattenbilds und zum Vergleich mit dem Schattenbild der Probe 14 zur Anwendung. Bei Verwendung der synthetischen Schlierenplatte anstelle der Musterprobe 40 umfaßt diese bei einer Wellenlänge von zum Beispiel 550 nm vorzugsweise Erhebungen mit positivem Phasenhub in Stufen von etwa 5 nm bis etwa 50 nm und Breiten von etwa 0,1 mm bis etwa 0,5 mm. Das Substratmaterial und die Erhebungen (synthetischen Schlieren) sind aus beständigem Material mit gleicher Brechzahl.

Da der Phasenhub an der Musterprobe 40 auch vom Material abhängt, werden vorzugsweise Musterproben 40 verwendet, die aus dem gleichen Material bestehen wie die zu untersuchende Probe 14. Alternativ ist es allerdings auch möglich, eine andere Musterprobe zu nehmen und diese mit einer Musterprobe aus dem zu untersuchenden optischen Probenmaterial interferometrisch zu kalibrieren. Das Schlierenmuster der so kalibrierten Schlierenplatte kann dann jederzeit dem Schlierenmuster einer Platte oder einer Probe aus einem anderen Material, wie zum Beispiel Kalziumfluorid oder Natriumfluorid, zugeordnet werden.

Als Material für die Schlierenplatte wird vorzugsweise Quarz bzw. Quarzglas verwendet, da dies ein unempfindliches Material ist.

Die Kalibrierung erfolgt dergestalt, daß der Schattenwurf und damit der Kontrast an der synthetischen Schlierenplatte bestimmt wird und anschließend oder auch zuvor mittels Interferometrie der Phasenhub und die Breite des jeweiligen Schattens des Testmusters aufgenommen wird. Da das Quadrat des Phasenhubes multipliziert mit der Schlierenbreite proportional zum Kontrast ist, läßt sich auf diese Weise der Kontrast mit dem Produkt aus Phasenhub und Breite in Beziehung setzen. Die hier benötigte Ortsauflösung der Interferometer ist von der zu erfassenden Schlierenbreite abhängig. So hat sich zum Beispiel für Schlieren mit einer Breite von 0,1 mm eine Ortsauflösung von 0,01 mm/Pixel als ausreichend erwiesen. Vorzugsweise sollte die Ortsauflösung pro Pixel mindestens 5 %, insbesondere mindestens 8 % und speziell mindestens 10 % der Schlierenbreite/Pixel betragen. In vielen Fällen werden hierfür Interferometer mit einer Ortsauflösung bis mindestens 200 nm pro Pixel oder weniger verwendet.

Der zu ermittelnde rms-Wert läßt sich dann wie bereits erwähnt bestimmen aus der Summe des Phasenhubs im Quadrat mal der Breite mal der Länge der einzelnen Schlieren, dividiert durch die Gesamtfläche der Probe.

Es ist zwar bei diesem Verfahren nicht möglich, aus dem Schattenbild den Phasenhub oder die Breite einer Schliere separat zu bestimmen, für die Spezifikation eines optischen Materials ist das jedoch auch nicht notwendig. Die Korrelation zwischen Kontrast und rms-Wert ist nur gering von der Breite der Schlieren abhängig und damit für eine eindeutige Schlierenklassifikation ausreichend.

Bei der Messung der Schlieren sollte bis zu jenen Einfallswinkeln gemessen werden, die bei der späteren Verwendung des Materials auftreten können, das gleiche gilt für die Austrittswinkel.

Das Sichtbarwerden von Schlieren in einer Probe hängt stark vom Einfallswinkel ab. Bereits eine Änderung des Einfallswinkels des Lichts um ein bis zwei Grad kann zu einem Verschwinden oder auch Hervortreten des Schattenbildes führen.

Die Lichtquelle 10, die Probe 14 und der Projektionsschirm 16 sind entlang der optischen Achse 20 des Meßaufbaus angeordnet; die optische Achse 20 verläuft durch die Lichtquelle 10 und den Mittelpunkt der Probe 14; der Projektionsschirm 16 liegt senkrecht zu dieser Achse 20. Der Abstand d zwischen Lampe 10 und Probe 14 beträgt etwa 2 m und der Abstand zwischen der Probe 14 und dem Projektionsschirm 16 etwa 1 m.

Die Kamera 18 ist seitlich von der optischen Achse 20 so angeordnet, daß das Schattenbild der Probe 14 auf dem Projektionsschirm 16 möglichst formatfüllend aufgenommen werden kann, ohne daß die Probe 14 oder ein anderes Element des Aufbaus in das Bildfeld der Kamera 18 hineinragt. Damit die perspektivische Verzerrung klein bleibt, wird der Winkel zwischen der optischen Achse 20 des Meßaufbaus und der optischen Achse der Kamera 18 möglichst klein gehalten. Wahlweise kann auch der Projektionsschirm 16 zur Kamera 18 hin geneigt sein.

Der Probenhalter 12 dient zur Aufnahme der in der Regel scheibenförmigen Probe 14 aus dem zu prüfenden glasartigen oder kristallinen optischen Material. Die Probe 14 wird anfänglich so auf den Probenhalter 12 aufgesetzt, daß die Oberflächen der Probe 14, durch die die optische Achse 20 des Meßaufbaus verläuft, senkrecht zu dieser optischen Achse 20 verlaufen. Der optische Mittelpunkt der Probe 14 liegt immer auf der optischen Achse 20 des Meßaufbaus. Die Probe 14 kann mittels des Probenhalters 12 um eine senkrechte Kippachse, die die optische Achse 20 unter einem rechten Winkel schneidet, um etwa ±50° verkippt werden. Außerdem kann die Probe 14 um eine mit der optischen Achse 20 zusammenfallende Drehachse um mindestens 90° um ihren Mittelpunkt gedreht werden.

Die Oberflächen der Probe 14, durch die die optische Achse 20 des Meßaufbaus verläuft, sind in der für optische Elemente üblichen Art poliert und zueinander parallel.

Das Muster der synthetischen Schlierenplatte 40 dient zum Vergleich der mit der Schattenmethode gewonnenen Schlierenbilder einer Probe 20 mit Schlieren bekannten Phasenhubs und bekannter Breite.

Mit dem Meßaufbau werden die Schatten von Schlieren in der Probe 14 bzw. der synthetischen Schlierenplatte 40 auf den Projektionsschirm 16 projiziert. Von der punktförmigen Lichtquelle 10 hoher Leuchtkraft wird die Probe 14 auf dem Probenhalter 12 mit einem definiert einstellbaren Lichtkonus beleuchtet. Dabei beträgt die Beleuchtungsstärke am Projektionsschirm 16 vorzugsweise wenigstens 100 lux. Der Lichtkonus ist vorzugsweise als divergentes Lichtbündel ausgestaltet. Weitere optionale optische Elemente im Beleuchtungsstrahlengang, wie etwa UV-Sperrfilter, dürfen nur in unmittelbarer telbarer Nähe der Lichtquelle oder etwaiger reeller Bilder eingesetzt werden.

Nach Durchtritt des Lichtbündels durch die Probe 14 entsteht das Schattenbild als phasengerechte Überlagerung des an den Schlieren gebeugten Lichts mit dem primären Lichtkegel. Die Schliereninformation steckt in erster Linie in der Phase, wovon nur ein geringer Anteil amplitudenmoduliert ist und wobei nur dieser Anteil ohne weiteren Aufwand als Intensitätsunterschied nachweisbar ist.

Dieses sehr kontrastarme Amplitudenbild wird nun so ungestört wie möglich mit hohem Signal-Rausch-Verhältnis aufgenommen. Dazu ist es vorteilhaft, nicht mit Hilfe abbildender Optik ein Luftbild, sondern das auf dem Projektionsschirm 16 erzeugte reelle Bild zu erfassen. Der Projektionsschirm muß ein diffuser Streuer ohne gerichtete Anteile sein und darf keine erkennbare Oberflächenstruktur aufweisen. Der diffuse Reflexionsgrad darf örtlich nicht variieren.

Da das Schlierenbild weniger als 1 % Kontrast aufweist, ist es erforderlich, den Kontrast bereits in der Kamera 18 so weit zu verstärken, daß anschließend eine Digitalisierung erfolgen kann um dieses in Form einer Datenbank elektronisch zu speichern. Dazu wird zweckmäßigerweise eine CCD-Kamera mit möglichst hoher Pixelzahl (zum Beispiel 1300 x 1030 Pixel) und einer mindestens 12 Bit tiefen Digitalisierung eingesetzt.

Die mit der Kamera aufgenommenen Rohdaten müssen aufbereitet werden, um eventuelle örtlich variierende Beleuchtungsstärken auf dem Projektionsschirm 16 und lokale Empfindlichkeitsunterschiede der Kamera 18 zu eliminieren und eine Darstellung der Schlieren mit hohem Kontrast zu gewinnen, was mittels üblichen Computerprogrammen möglich ist, wie sie als Bildverarbeitungssoftware mit Kontrast- und Intensitätssteuerung bzw. Erkennung zusammen mit handelsüblichen CCD-Kameras erhältlich sind.

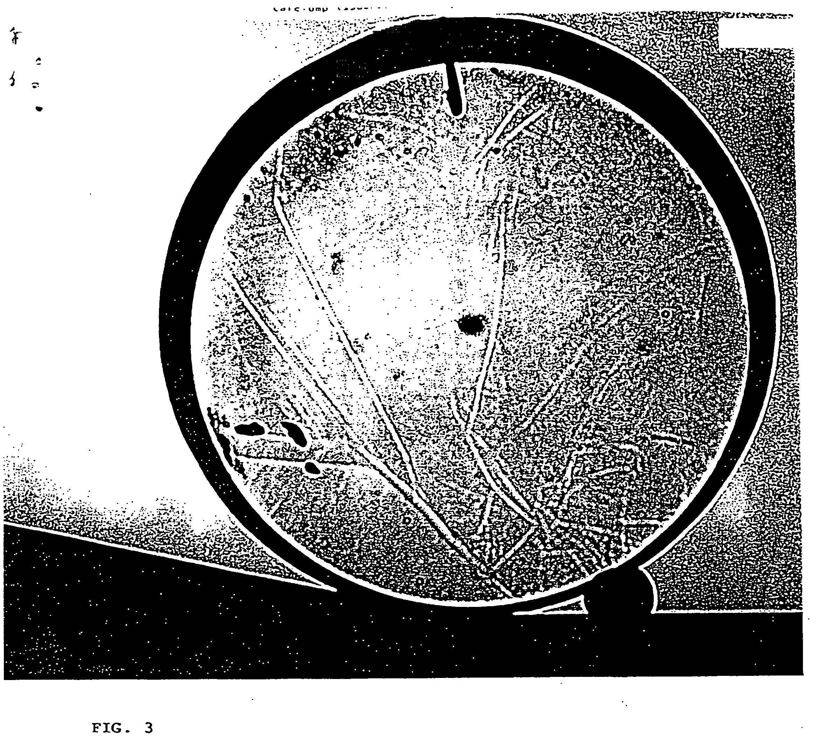

Die Verarbeitung der Rohdaten ist mittels einfacher leicht zu erstellender Software möglich. Dabei soll die Schlierenbilderkennung Schlieren von Kratzern, Fusseln, Oberflächeneffekten, schlechter Reinigung der Scheibe/Optik unterscheiden können und auch Schlieren mit einem Kontrast, der kleiner ist als das Rauschen erkennen können. Prinzipiell wird dabei die Bilderkennung des Zusammenspiels von Auge und Gehirn kopiert, das heißt es werden Schlieren wie beim Menschen durch andere Kontrastschwankungen unterschieden. Dabei wird derart vorgegangen, dass ein Schlierenfilter auf einer Linie nach Punkten bzw. Bereichen mit mittleren, dunklen, hellen Helligkeitsbereichen einer vorbestimmten Breite sucht. Wie Fig. 3 zu entnehmen ist, zeichnet sich eine Schliere durch eine längliche Form mit einer hellen Mitte und dunklen Rändern aus. Demgegenüber zeigt der schlierenfreie Bereich eine mittlere Helligkeit. Ein Querschnitt durch einen Bereich, der eine Schliere enthält, zeigt somit den Übergang von mittlerer Helligkeit (schlierenfreier Bereich) zum dunklen Schlierenrand, dann zur hellen Schlierenmitte und wieder zum dunklen gegenüberliegenden Schlierenrand und schließlich wieder zur mittleren Helligkeit. Weisen Nachbarbezirke hintereinander in länglicher Richtung ebenfalls eine solche Helligkeitssignatur auf, dann wird angenommen, dass es sich hierbei um eine Schliere handelt. Eine derartige Software ist mittels einer Vielzahl von bekannten Parametern auf an sich bekannte Weise optimierbar. Dies bedeutet, dass jeweils bestimmt wird welche Kontrastschwellen zwischen mittel-dunkelhell-dunkel-mittel Signaturen vorliegen müssen und welche Symmetrie die Helligkeitssignatur aufweisen muss. Darüber hinaus wird ebenso bestimmt wieviele Nachbarn dieselbe Signatur aufweisen müssen, damit davon ausgegangen werden kann, dass die vorliegende Struktur eine Schliere darstellt. Ebenfalls wird die Sollbreite derartiger Schlieren variiert. Ein typisches Schlierenbild ist beispielsweise Figur 3 zu entnehmen.

Zur Kontrolle der Aufnahmebedingungen und zur Kalibrierung sowie zur Zuordnung der an einer Probe 14 des zu prüfenden optischen Materials erhaltenen Kontrastbilder von Schlieren zu Schlieren mit bestimmten Breiten und Phasenhüben wird statt einer Probe 14 die synthetische Schlierenplatte 40 auf den Probenhalter 12 aufgesetzt und das Bild der Musterschlieren auf dem Projektionsschirm 16 von der Kamera 18 aufgenommen. Daraus läßt sich dann für die gleichen Einstellungen des Abbildungsmaßstabs, des Offsets, der Verstärkung der Kamera usw. die Abhängigkeit des Schlierenkontrastes vom Phasenhub ermitteln.

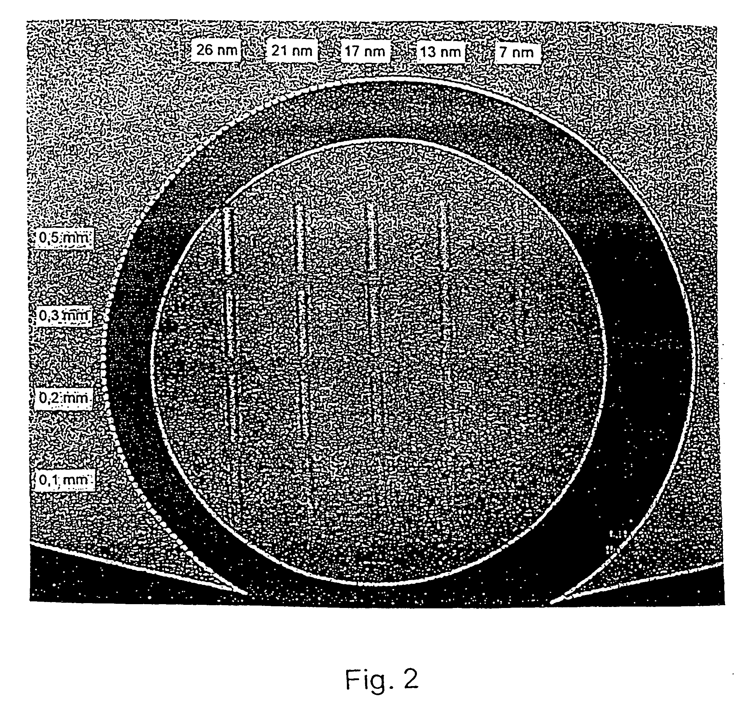

Die Fig. 2 zeigt das mit einem Meßaufbau wie oben beschrieben erhaltene Schattenbild einer synthetischen Schlierenplatte 40, wobei auch der Phasenhub und die Schlierenbreite angegeben sind. Der an der synthetischen Schlierenplatte 40 gemessene Bildkontrast läßt sich als Funktion von Phasenhub und Schlierenbreite darstellen und mit dem Bildkontrast der Probe 14 aus dem zu prüfenden Material vergleichen.

Der Vergleich erfolgt in einer der Kamera 18 nachgeschalteten elektronischen Bildverarbeitungseinrichtung. Dabei werden die Grauwerte für die jeweils gemessenen Bildkontraste miteinander verglichen und daraus eine quantitative Bewertung der Schlieren in der Probe 14 abgeleitet.

Es ist dabei nicht erforderlich, für gleichartige Proben 14 immer wieder ein neues Schattenbild der synthetischen Schlierenplatte 40 aufzunehmen; das Schattenbild der synthetischen Schlierenplatte 40 kann auch in bereits mehr oder weniger aufbereiteter Form in der Bildverarbeitungseinrichtung elektronisch gespeichert werden.

Die Kalibrierung mit der synthetischen Schlierenplatte 40 ist im Prinzip somit nur einmal nötig, da alle weiteren Vergleiche im Computer vorgenommen werden können, nachdem die mit der synthetischen Schlierenplatte erzeugten Kontraste als Basis für die Vergleiche im Computer abgespeichert sind. Trotzdem kann es sinnvoll sein, zumindest von Zeit zu Zeit zu überprüfen, ob sich die mit der synthetischen Schlierenplatte von der Kamera aufgenommenen Werte verändert haben. Der Grund dafür kann zum Beispiel eine Änderung der Kamerafokussierung sein oder Staub und Schmutz auf der Linse der Kamera oder auch durch technische Defekte hervorgerufen werden. Das Gleiche gilt natürlich auch für die Lampe, mit der die Schlieren sichtbar gemacht werden. Auch hier können sich durch Alterung der Lampe, der Linsen etc. Änderungen im Beleuchtungsverhältnis ergeben. Bei späteren Messungen wird aber die synthetische Schlierenplatte 40 ausschließlich zur Kontrolle eingesetzt, um sicherzustellen, daß die im Computer abgespeicherten Referenzwerte immer noch Gültigkeit haben.

Das genannte Verfahren und die genannte Vorrichtung eignen sich nicht nur für die Bestimmung der Schlieren in Material der Schlieren in Material für künftige Linsen, sondern auch in Material für andere optische Elemente beispielsweise Prismen, Würfel, Lichtleiter und dergleichen. Besonders bevorzugt ist eine Verwendung an $CaF_2$, $BaF_2$, $SrF_2$, $NaF$ und anderen Kristallen, insbesondere an großvolumigen Einkristallen.

Die Erfindung betrifft somit auch die Verwendung von mit der erfindungsgemäßen Vorrichtung bzw. mit dem erfindungsgemäßen Verfahren erhaltenem Material zur Herstellung von Linsen, Prismen, Lichtleitstäben, optischen Fenstern sowie optischen Komponenten für die DUV-Fotolithografie, Steppern, Lasern, insbesondere von Excimer-Lasern, Wafern, Computerchips, sowie integrierten Schaltungen und elektronischen Geräten, die solche Schaltungen und Chips enthalten.

Bezugszeichenliste:

10      Lichtquelle

12 Probenhalter
14 Probe
16 Projektionsschirm
18 Kamera
20 optische Achse
40 synthetische Schlierenplatte

**Patentansprüche**

1. Verfahren zur Bewertung von Schlieren in optischen Materialien nach der Schattenmethode, umfassend

das Durchstrahlen einer Probe (14) mit Licht von einer Lichtquelle (10), und

das Erzeugen eines reellen Schattenbildes der Probe (14) auf einem Projektionsschirm (16),

**dadurch gekennzeichnet,**

**daß** das Schattenbild der Probe (14) auf dem Projektionsschirm (16) von einer elektronischen Bildaufnahmeeinrichtung (18) aufgenommen wird,

**daß** das von der elektronischen Bildaufnahmeeinrichtung (18) aufgenommene Schattenbild der Probe (14) einer Bildbearbeitung unterworfen wird, die jeweils den Bildkontrast von Schlieren feststellt, und

**daß** die an der jeweiligen Probe (14) gemessenen Bildkontraste mit den Bildkontrasten in dem Schattenbild von Schlierenmustern einer Musterprobe (40) verglichen und anhand des Vergleichsergebnisses die Schlieren in der Probe (14) des optischen Materials bewertet werden.

2. Verfahren nach Anspruch 1, **dadurch gekennzeichnet, daß** das Schlierenmuster der Musterprobe (40) interferometrisch vermessen wird, wobei die interferometrische Messung zur Kalibrierung der an der Probe (14) erfaßten Bildkontraste dient.

3. Verfahren nach Anspruch 1 oder Anspruch 2, **dadurch gekennzeichnet, daß** die Musterprobe (40) aus dem gleichen Material besteht wie die zu bewertende Probe aus optischem Material.

4. Verfahren nach Anspruch 1 oder Anspruch 2, **dadurch gekennzeichnet, daß** die Musterprobe (40) aus einem anderen Material besteht als die zu bewertende Probe aus optischem Material, und daß diese Musterprobe (40) mit einer anderen Musterprobe aus dem zu bewertenden optischen Material interferometrisch kalibriert wird.

5. Verfahren nach einem der vorstehenden Ansprüche, **dadurch gekennzeichnet, daß** mit der Musterprobe (40) eine synthetische Schlierenplatte kalibriert wird, die künstliche Schlieren mit einem positiven Phasenhub in Stufen von etwa 5 nm bis etwa 50 nm und Breiten von etwa 0,1 mm bis etwa 0,5 mm bei einer Wellenlänge von 550 nm aufweist.

6. Verfahren nach einem der vorstehenden Ansprüche, **dadurch gekennzeichnet, daß** die Probe (14) bezüglich der optischen Achse (20) des Meßaufbaus für die Schattenmethode in einer Anzahl Richtungen gekippt und gedreht werden kann.

7. Verfahren nach einem der vorstehenden Ansprüche, **dadurch gekennzeichnet, daß** das optische Material ein kristallines oder ein glasartiges Material ist.

8. Verfahren nach Anspruch 7, **dadurch gekennzeichnet, daß** das optische, kristalline Material $CaF_2$ oder $BaF_2$ ist.

9. Verfahren nach Anspruch 1, **dadurch gekennzeichnet, daß** die elektronische Bildaufnahmeeinrichtung eine digitale Kamera (18) ist.

10. Vorrichtung zur Durchführung des Verfahrens nach einem der vorstehenden Ansprüche, mit

einer Lichtquelle (10),
einem Probenhalter (12),
und
einem Projektionsschirm (16),

**gekennzeichnet durch**

eine elektronische Bildaufnahmeeinrichtung (18) zur Aufnahme des Schattenbildes einer Probe (14) auf dem Projektionsschirm (16) und eine der Bildaufnahmeeinrichtung nachgeschaltete Bildverarbeitungseinrichtung, die dafür ausgelegt ist, den Bildkontrast von Schliesen in der Probe festzustellen und mit den Bildkontrasten im Schattenbild von Schliesenmustern einer Musterprobe (40) zu vergleichen.

11. Vorrichtung nach Anspruch 10, **dadurch gekennzeichnet, daß** das Schattenbild der Musterprobe und/oder einer synthetischen Schlierenplatte (40) in der Bildverarbeitungseinrichtung gespeichert ist.

12. Vorrichtung nach Anspruch 10, **dadurch gekennzeichnet, daß** die elektronische Bildaufnahmeeinrichtung eine digitale Kamera (18) ist.

13. Verwendung von nach einem der Verfahren der Ansprüche 1 bis 9 und/oder mit der Vorrichtung nach einem der Ansprüche 10 - 12 erhaltenen Material zur Herstellung von Linsen, Prismen, Lichtleitstäben, optischen Fenstern sowie optischen Komponenten für die DUV-Fotolithografie, Steppern, Lasern, insbesondere von Excimer-Lasern, Computerchips, sowie integrierten Schaltungen und elektronischen Geräten, die solche Schaltungen und Chips enthalten.

## Claims

1. Method for assessing striae in optical materials by using the shadow method, comprising

   transilluminating a sample (14) with light from a light source (10), and

   producing a real shadow image of the sample (14) on a projection screen (16),

   **characterized**

   **in that** the shadow image of the sample (14) on the projection screen (16) is recorded by an electronic image recording device (18),

   **in that** the shadow image of the sample (14) recorded by the electronic image recording device (18) is subjected to image processing which determines the image contrast of striae in each case, and

   **in that** the image contrasts measured on the respective sample (14) are compared with the image contrasts in the shadow image of striae patterns of a master sample (40), and the result of the comparison is used to assess the striae in the sample (14) of the optical material.

2. Method according to Claim 1, **characterized in that** the striae pattern of the master sample (40) is measured interferometrically, the interferometric measurement serving to calibrate the image contrasts detected at the sample (14).

3. Method according to Claim 1 or Claim 2, **characterized in that** the master sample (40) consists of the same material as the sample of optical material that is to be assessed.

4. Method according to Claim 1 or Claim 2, **characterized in that** the master sample (40) consists of a different material from the sample of optical material that is to be assessed, and **in that** this master sample (40) is calibrated interferometrically with the aid of another master sample made from the optical material to be assessed.

5. Method according to one of the preceding claims, **characterized in that** the master sample (40) is used to calibrate a synthetic striated plate which has artificial striae with a positive phase deviation in steps of approximately 5 nm to approximately 50 nm and widths of approximately 0.1 mm to approximately 0.5 mm for a wavelength of 550 nm.

6. Method according to one of the preceding claims, **characterized in that** for the shadow method the sample (14) can be tilted and rotated in a number of directions with reference to the optical axis (20) of the measuring setup.

7. Method according to one of the preceding claims, **characterized in that** the optical material is a crystalline or a vitreous material.

8. Method according to Claim 7, **characterized in that** the optical, crystalline material is $CaF_2$ or $BaF_2$.

9. Method according to Claim 1, **characterized in that** the electronic image recording device is a digital camera (18).

10. Apparatus for carrying out the method according to one of the preceding claims having

    a light source (10),
    a sample holder (12), and
    a projection screen (16),

    **characterized by**

    an electronic image recording device (18) for recording the shadow image of a sample (14) on the projection screen (16), and an image processing device which is connected downstream of the image recording device and is designed to determine the image contrast of striae in the sample, and to compare it with the image contrasts in the shadow image of striae patterns of a master sample (40).

11. Apparatus according to Claim 10, **characterized in that** the shadow image of the master sample and/or of a synthetic striated plate (40) are/is stored in the image processing device.

12. Apparatus according to Claim 10, **characterized in that** the electronic image recording device is a digital camera (18).

13. Use of material obtained according to one of the methods of Claims 1 to 9 and/or with the aid of the apparatus according to one of Claims 10 to 12 in order to produce lenses, prisms, light-conducting rods, optical windows as well as optical components for DUV-photolithography, steppers, lasers, in particular excimer lasers, computer chips as well as integrated circuits and electronic equipment containing such circuits and chips.

## Revendications

1. Procédé permettant l'évaluation de stries dans des matériaux optiques selon la méthode des ombres, comprenant

   - la traversée d'un échantillon (14) par la lumière d'une source de lumière (10), et

- la production d'une image d'ombre réelle de l'échantillon (14) sur un écran de projection (16),

**caractérisé en ce que**

- l'image d'ombre de l'échantillon (14) sur l'écran de projection (16) est enregistrée par un dispositif électronique d'enregistrement d'image (18),
- l'image d'ombre de l'échantillon (14) enregistrée par le dispositif électronique d'enregistrement d'image (18) est soumise à un traitement d'image, qui fixe chaque fois le contour d'image de stries, et
- les contrastes d'image mesurés sur l'échantillon respectif (14) sont comparés aux contrastes d'image dans l'image d'ombre de modèles de stries d'un échantillon modèle (40) et les stries dans l'échantillon (14) du matériau optique sont évaluées à l'aide du résultat de la comparaison.

2. Procédé selon la revendication 1, **caractérisé en ce que** le modèle de stries de l'échantillon modèle (40) est mesuré par interférométrie, la mesure interférométrique servant au calibrage des contrastes d'image déterminés sur l'échantillon (14).

3. Procédé selon la revendication 1 ou la revendication 2, **caractérisé en ce que** l'échantillon modèle (40) est constitué du même matériau que l'échantillon en matériau optique à évaluer.

4. Procédé selon la revendication 1 ou la revendication 2, **caractérisé en ce que** l'échantillon modèle (40) est constitué d'un autre matériau que l'échantillon en matériau optique à évaluer, et **en ce que** cet échantillon modèle (40) est calibré par interférométrie avec un autre échantillon modèle constitué du matériau optique à évaluer.

5. Procédé selon l'une quelconque des revendications précédentes, **caractérisé en ce que** l'on calibre avec l'échantillon modèle (40) une plaque striée synthétique, qui présente des stries artificielles avec un niveau de phase positif en échelons d'environ 5 nm à environ 50 nm et des largeurs d'environ 0,1 mm à environ 0,5 mm pour une longueur d'onde de 550 nm.

6. Procédé selon l'une quelconque des revendications précédentes, **caractérisé en ce que** l'échantillon (14) peut être incliné et tourné dans plusieurs directions par rapport à l'axe optique (20) de la structure de mesure pour la méthode des ombres.

7. Procédé selon l'une quelconque des revendications précédentes, **caractérisé en ce que** le matériau optique est un matériau cristallin ou un matériau vitreux.

8. Procédé selon la revendication 7, **caractérisé en ce que** le matériau optique cristallin est le $CaF_2$ ou le $BaF_2$.

9. Procédé selon la revendication 1, **caractérisé en ce que** le dispositif électronique d'enregistrement d'image est une caméra numérique (18).

10. Dispositif pour la mise en oeuvre du procédé selon l'une quelconque des revendications précédentes, avec

- une source de lumière (10),
- un porte-échantillon (12), et
- un écran de projection (16),

**caractérisé par**

- un dispositif électronique d'enregistrement d'image (18) pour l'enregistrement de l'image d'ombre d'un échantillon (14) sur l'écran de projection (16), et
- un dispositif de traitement d'image installé à la suite du dispositif d'enregistrement d'image, qui est conçu pour détecter le contraste d'image de stries dans l'échantillon et le comparer avec les contrastes d'image dans l'image d'ombre de modèles de stries d'un échantillon modèle (40).

11. Dispositif selon la revendication 10, **caractérisé en ce que** l'image d'ombre de l'échantillon modèle et/ou d'une plaque striée synthétique (40) est mémorisée dans le dispositif de traitement d'image.

12. Dispositif selon la revendication 10, **caractérisé en ce que** le dispositif électronique d'enregistrement d'image est une caméra numérique (18).

13. Utilisation d'un matériau obtenu selon l'un quelconque des procédés des revendications 1 à 9 et/ou avec le dispositif selon l'une quelconque des revendications 10 - 12 pour la fabrication de lentilles, de prismes, de baguettes à fibres optiques, de fenêtres optiques ainsi que de composants optiques pour la photolithographie DUV, de moteurs pas-à-pas, de lasers, en particulier de lasers à excimère, de puces pour ordinateurs, ainsi que de circuits imprimés et d'appareils électroniques qui contiennent de tels circuits et puces.

Fig. 1

Fig. 2

FIG. 3